(19) **Europäisches Patentamt**
**European Patent Office**
**Office européen des brevets**

(11) **EP 4 455 858 B1**

(12) **EUROPEAN PATENT SPECIFICATION**

(45) Date of publication and mention
of the grant of the patent:
**26.02.2025  Bulletin 2025/09**

(51) International Patent Classification (IPC):
***G06F 3/12*** *(2006.01)*

(21) Application number: **23213628.3**

(52) Cooperative Patent Classification (CPC):
**G06F 3/1215; G06F 3/124; G06F 3/1241;
G06F 3/1288**

(22) Date of filing: **01.12.2023**

(54) **INFORMATION PROCESSING SYSTEM, INFORMATION PROCESSING PROGRAM, AND
INFORMATION PROCESSING METHOD**

INFORMATIONSVERARBEITUNGSSYSTEM, INFORMATIONSVERARBEITUNGSPROGRAMM
UND INFORMATIONSVERARBEITUNGSVERFAHREN

SYSTÈME DE TRAITEMENT D'INFORMATIONS, PROGRAMME DE TRAITEMENT
D'INFORMATIONS ET PROCÉDÉ DE TRAITEMENT D'INFORMATIONS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.04.2023  JP 2023070997**

(43) Date of publication of application:
**30.10.2024  Bulletin 2024/44**

(73) Proprietor: **FUJIFILM Business Innovation Corp.
Minato-ku
Tokyo (JP)**

(72) Inventor: **SHIRAISHI, Yoshinori
Yokohama-shi, Kanagawa (JP)**

(74) Representative: **Kurig, Thomas
Becker Kurig & Partner
Patentanwälte mbB
Bavariastraße 7
80336 München (DE)**

(56) References cited:
**US-A1- 2012 133 984     US-A1- 2016 139 859**

**Description**

BACKGROUND OF THE INVENTION

(i) Field of the Invention

The present disclosure relates to an information processing system, an information processing program, and an information processing method.

(ii) Description of Related Art

JP2013-077129A discloses a distributed printing system including a printing apparatus and a plurality of client computers using the printing apparatus. Each of the plurality of client computers includes an acceptance unit that accepts an input of a print instruction of print data from a user, and an address information acquisition unit that inquires the printing apparatus of address information of the plurality of client computers and acquires the address information, in a case where the print instruction is input. Further, each of the plurality of client computers includes a division unit that divides print data into a plurality of pieces of division data, and a distribution unit that distributes the plurality of pieces of division data to a destination designated by the address information of the plurality of client computers. Further, each of the plurality of client computers includes a reception unit that receives division data from another client computer, a generation unit that rasterizes the received division data to generate a divided printing job, and a transmission unit that transmits the generated divided printing job to the printing apparatus. Further, the printing apparatus includes an address information notification unit that notifies the address information acquisition unit of address information of the plurality of client computers, in response to an inquiry from the address information acquisition unit, and a reception unit that receives a divided printing job. Further, the printing apparatus includes a printing unit that prints the divided printing jobs received by the reception unit in an order within the print data indicated by the division data.
US 2012/133984 A1 discloses a print document processing system including a cache apparatus and plural data processing apparatuses. The cache apparatus includes a cache memory, a state memory, and a first response providing unit. Each data processing apparatus includes an image data creating unit, a query unit, and a controller. The cache memory stores image data created by each data processing apparatus. Upon receipt of a query issued by the query unit on image data of a document element, the first response providing unit provides a CREATING response if a state stored in the state memory in association with the image data indicates that the image data is not in the cache memory and is currently being created by any other data processing apparatus. Upon receipt of the CREATING response, the controller performs control to use the image data after created or cause the image data creating unit to create the image data.
US 2016/139859 A1 discloses a control apparatus including a first predicting unit configured to predict a rasterizing time for each of predetermined units of processing of a first print job, an allocating unit configured to allocate a plurality of divided jobs acquired by dividing the first print job into the units of the processing to a plurality of rasterizing units, an acquiring unit configured to acquire an actual value of a rasterization speed of each of the rasterizing units, and a second predicting unit configured to predict completion times of rasterization processing of a second print job in each of the rasterizing units based on the actual values of the rasterization speed of each of the rasterizing units and processing states of each of the rasterizing units. In this case, the allocating unit divides and allocates the print jobs to each of the rasterizing units based on the prediction results.

SUMMARY OF THE INVENTION

There is a technique of rasterizing an image with a processing apparatus and printing the raster image created by being rasterized with one or a plurality of image forming apparatuses. In a case where the print data (in the following, also denoted as "printed matter") is rasterized by one processing apparatus at the same timing, for example, the more images included in the printed matter, the heavier the load on the processing apparatus. In order to reduce the load on the processing apparatus, it is conceivable to distribute the rasterizing of the images included in the printed matter. However, there is no mechanism for determining which of the distributed images is to be rasterized by one or a plurality of processing apparatuses.

The present invention is provided in the appended claims. The flowing disclosure serves a better understanding of the present invention. An object of the present disclosure is to provide an information processing system, an information processing program, and an information processing method capable of causing one or a plurality of processing apparatuses to rasterize distributed images.

According to a first aspect of the present disclosure, there is provided an information processing system including: a processor configured to: in a case where a plurality of images included in a printed matter are distributed to and rasterized by one or a plurality of processing apparatuses, the processing apparatus including at least one of a physically independent processing apparatus or a processing apparatus virtually configured in a physical apparatus, and one or a plurality of image forming apparatuses print a plurality of raster images created by being rasterized, cause the one or plurality of processing apparatuses to rasterize the images, respectively.

Further, in the information processing system, the processor is configured to: for a raster image created by being rasterized among the plurality of images, acquire an actual measurement value of a processing time required for rasterization and an actual measurement value of a transfer time for transferring the raster image to the image forming apparatus, respectively; for each of unprocessed images that are not rasterized among the plurality of images, predict a predicted value of a total time obtained by summing the processing time and the transfer time, based on the actual measurement value of the processing time and the actual measurement value of the transfer time; and cause the one or plurality of processing apparatuses to rasterize the unprocessed images assigned such that a difference between predicted values of the total time for respective processing apparatuses is within a predetermined range

BRIEF DESCRIPTION OF THE DRAWINGS

Exemplary embodiment(s) of the present invention will be described in detail based on the following figures, wherein:

Fig. 1 is a schematic diagram showing an example of a hardware configuration of a rasterization system according to an exemplary embodiment;
Fig. 2 is a block diagram showing an example of a hardware configuration of an information processing apparatus in the exemplary embodiment;
Fig. 3 is a flowchart showing an example of a flow of information processing performed by the information processing apparatus according to the exemplary embodiment;
Fig. 4 is a schematic diagram showing an example of a configuration of an image database according to the exemplary embodiment; and
Fig. 5 is a flowchart showing an example of a flow of a prediction process performed by the information processing apparatus according to the exemplary embodiment;

DETAILED DESCRIPTION OF THE INVENTION

Hereinafter, an example of the exemplary embodiment of the present disclosure will be described with reference to the drawings. The identical reference numerals are given to the identical or equivalent components and parts in each drawing. In addition, the dimensional ratios in the drawings are exaggerated for convenience of explanation and may differ from the actual ratios.

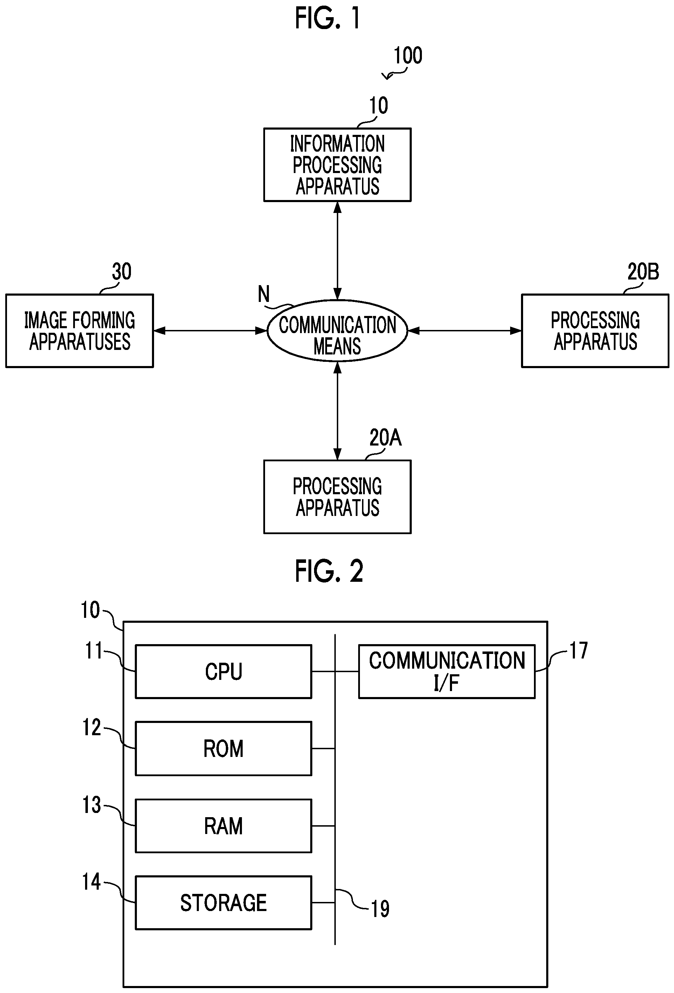

As shown in Fig. 1, the rasterization system 100 according to the present exemplary embodiment includes an information processing apparatus 10, one or more processing apparatuses 20A, 20B, ..., and one or more image forming apparatuses 30. Hereinafter, in a case where the processing apparatuses 20A, 20B, ... are not distinguished, the term "processing apparatus 20" is simply used. The number of processing apparatuses 20 is not limited to the number shown in Fig. 1. Further, the number of image forming apparatuses 30 is not limited to the number shown in Fig. 1.

The information processing apparatus 10, the processing apparatus 20, and the image forming apparatus 30 are able to communicate with each other via communication means N. In the present exemplary embodiment, a public communication line such as the Internet or a telephone line is applied as the communication means N. However, the present invention is not limited to this example. For example, as the communication means N, a communication line in a company such as a local area network (LAN) or a wide area network (WAN) may be applied, or a communication line in a company and a public communication line may be applied in combination. Further, in the present exemplary embodiment, a wireless communication line is applied as the communication means N. However, the present invention is not limited to this example. As the communication means N, a wired communication line may be applied, or a combination of wired and wireless communication lines may be applied.

The processing apparatus 20 is an apparatus for rasterizing an image. The processing apparatus 20 transmits the raster image created by being rasterized to the image forming apparatus 30 via the communication means N. The processing apparatuses 20 may be physically independent or may be virtually configured in the physical apparatus. In other words, the processing apparatuses 20 included in the rasterization system 100 include at least one of a physically independent processing apparatuses 20 or processing apparatuses 20 virtually configured in the physical apparatus.

The image forming apparatus 30 prints a plurality of raster images created by being rasterized by the processing apparatus 20.

The information processing apparatus 10 distributes a plurality of images included in the printed matter to the processing apparatuses 20 to rasterize the plurality of images. The information processing apparatus 10 is an example of an information processing system. In addition, the term "system" in the present exemplary embodiment includes both a system configured by a plurality of apparatuses and a system configured by a single apparatus.

As shown in Fig. 2, the information processing apparatus 10 includes various components, such as a central processing unit (CPU) 11, a read only memory (ROM) 12, a random access memory (RAM) 13, a storage 14, and a communication interface (communication I/F) 17. The configurations are connected to each other via a bus 19 in a communicable manner.

The CPU 11 is a central arithmetic processing unit, and executes various programs or controls each unit. That is, the CPU 11 reads out a program from the ROM 12 or the storage 14, and executes the program using the RAM 13 as a work area. The CPU 11 controls each configuration and performs various types of arithmetic processing according to the program recorded in the ROM 12 or the storage 14. In the present exemplary embodiment, an information processing program and an image database 12A are stored in the ROM 12 or the storage 14.

The ROM 12 stores various programs and various data. The RAM 13 transitorily stores the program or the data, as the work area. The storage 14 is configured by a hard disk drive (HDD) or a solid state drive (SSD), and stores various programs including an operating system and various data.

The communication I/F 17 is an interface that is used to communicate with other apparatuses, such as the processing apparatus 20 and the image forming apparatus 30. For example, standards, such as Ethernet (registered trademark), FDDI, and Wi-Fi (registered trademark), are used as the communication I/F 17.

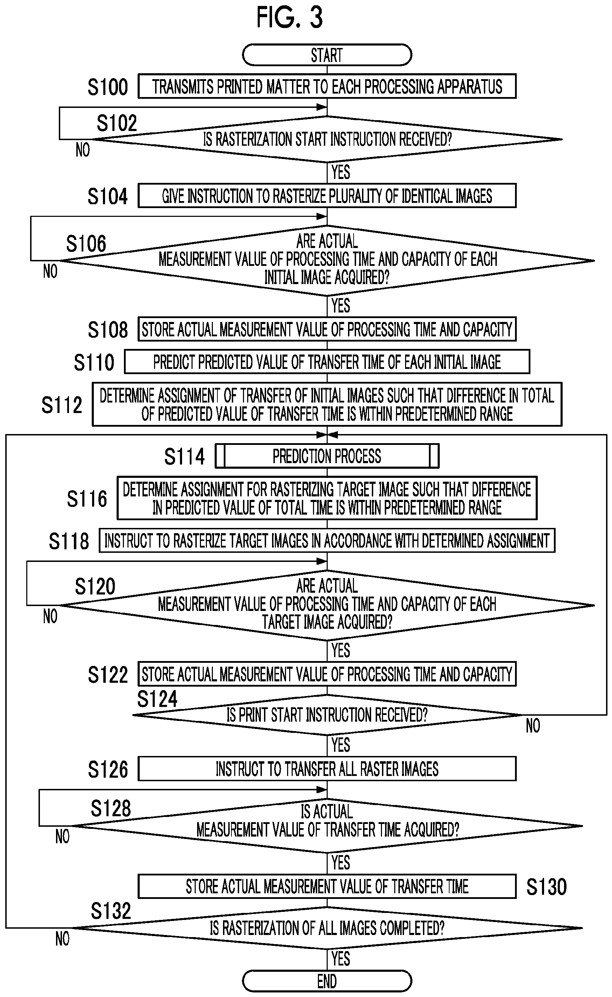

Next, a flow of the information processing in the information processing apparatus 10 of the present exemplary embodiment will be described with reference to Fig. 3. The information processing is performed by the CPU 11 reading out the information processing program from the ROM 12 or the storage 14, loading the program into the RAM 13, and executing the program.

In step S100 of Fig. 3, the CPU 11 transmits the identical printed matter to each processing apparatus 20. Hereinafter, the identical printed matter transmitted by the CPU 11 to each processing apparatus 20 is simply referred to as a "printed matter". In the present exemplary embodiment, the CPU 11 transmits the printed matter to all the processing apparatuses 20 (the processing apparatus 20A and the processing apparatus 20B in the example shown in Fig. 1) included in the rasterization system 100.

In step S102, the CPU 11 waits until a rasterization start instruction for starting rasterization of the plurality of images included in the printed matter is received. In a case where the rasterization start instruction is received (step S102: YES), the CPU 11 proceeds to step S104.

In step S104, the CPU 11 instructs each processing apparatus 20 to rasterize a plurality of identical images among images related to the rasterization start instruction. For example, in a case where the rasterization start instruction for 100 images is received, the CPU 11 instructs all the processing apparatuses 20, to which the printed matter is transmitted in step S100, to rasterize the first to fifteenth images among the 100 images. Hereinafter, the plurality of identical images for which the CPU 11 has instructed rasterization in step S104 are collectively referred to as initial images. In the present exemplary embodiment, the number of initial images is predetermined by the user of the information processing apparatus 10.

In step S106, the CPU 11 waits until the raster capacity and actual measurement value of the processing time required for rasterization for each processing apparatus 20 after rasterization for each initial image are acquired from each processing apparatus 20. In other words, the CPU 11 waits until the raster capacity and the actual measurement value of the processing time for each processing apparatus 20 for each raster image created by being rasterized are acquired from all the processing apparatuses 20 which receive the rasterization instruction in step S104. For example, in a case where the CPU 11 instructs the processing apparatus 20A and the processing apparatus 20B to rasterize the initial images in step S104, the CPU 11 acquires for the first initial image, the raster capacity, the actual measurement value of the processing time of the processing apparatus 20A, and the actual measurement value of the processing time of the processing apparatus 20B. In a case where the raster capacity and actual measurement value of the processing time for each processing apparatus 20 for each initial image are acquired from each processing apparatus 20 (step S106: YES), the CPU 11 proceeds to step S108.

In step S108, the CPU 11 stores the raster capacity and actual measurement value of the processing time for each processing apparatus 20 for each initial image, which are received in step S106, in the image database 12A.

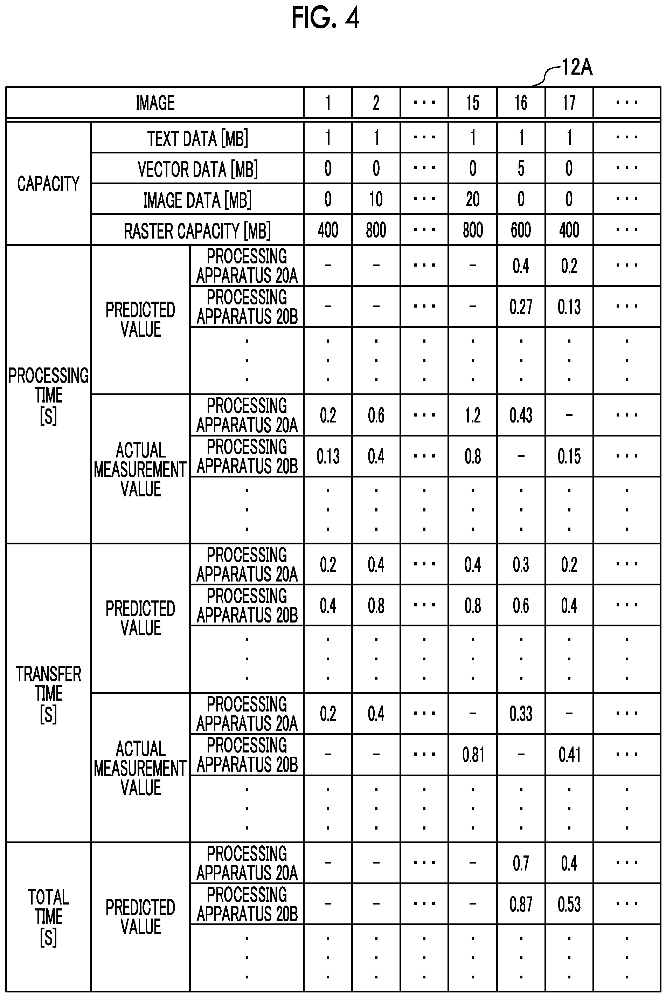

Fig. 4 shows an example of the configuration of the image database 12A. As shown in Fig. 4, in the image database 12A, the capacity, the processing time, the transfer time for transferring an image from the processing apparatus 20 to the image forming apparatus 30, and the total time obtained by summing the processing time and the transfer time are stored in association with each other. As the capacity, a capacity of text data forming an image, a capacity of vector data forming an image, a capacity of image data forming an image, and a raster capacity are stored. The predicted values and actual measurement values for the processing time, the transfer time, and the total time for each processing apparatus 20 are stored. In the example shown in Fig. 4, images 1 to 15 represent initial images.

In step S110, the CPU 11 predicts the predicted value of the transfer time of each initial image for each processing apparatus 20. In the present exemplary embodiment, the CPU 11 predicts a predicted value of the transfer time of each initial image, based on the raster capacity of the initial image and the transfer band from the processing apparatus 20 to the image forming apparatus 30. Specifically, the CPU 11 predicts a value obtained by dividing the raster capacity of the initial image by the communication speed in the transfer band as a predicted value of the transfer time of the initial image. For example, in a case where the communication speed in the transfer band from the processing apparatus 20A to the image forming apparatus 30 is 2 [GB] per second, and the communication speed in the transfer band from the processing apparatus 20B to the image forming apparatus 30 is 1 [GB] per second, the CPU 11 predicts the predicted value of the transfer time of an initial image with a raster capacity of 400 [MB], as 0.2 seconds for the processing apparatus 20A and 0.4 seconds for the processing apparatus 20B. Then, the CPU 11 stores the calculated predicted value of the transfer time for each processing apparatus 20 in the image database 12A.

In step S112, the CPU 11 determines the assignment of the transfer of the initial images such that the difference between the totals of the predicted values of the transfer time for respective processing apparatuses 20 is within a predetermined range. For example, the CPU 11 determines that the processing apparatus 20A transfers the first to fifth images and the tenth to fifteenth images of the initial image and the processing apparatus 20B transfers the sixth to ninth images of the initial image. In the present exemplary embodiment, the predetermined range is predetermined by the user of the information processing apparatus 10.

In step S114, the CPU 11 executes the prediction process. Specifically, the CPU 11 predicts a predicted value of the total time for each processing apparatus 20 for a predetermined number of unprocessed images, among the unprocessed images that are not rasterized included in the printed matter. The details of the prediction process will be described later. Further, in the following, the unprocessed images for which the CPU 11 predicts the predicted value of the total time in the prediction process are referred to as target images.

Further, in the present exemplary embodiment, the number of target images is identical to the number of initial images. However, the present invention is not limited to this example. The number of target images may be different from the number of initial images.

In step S116, the CPU 11 determines the assignment for distributing and rasterizing the target images such that a difference between the predicted values of the total time for respective processing apparatuses 20 is within a predetermined range. In the present exemplary embodiment, the predetermined range is predetermined by the user of the information processing apparatus 10.

In step S118, the CPU 11 instructs each processing apparatus 20 to rasterize the target images in accordance with the assignment determined in step S116. For example, the CPU 11 gives an instruction to each processing apparatus 20 such that the processing apparatus 20A rasterizes the first to fifth images and the tenth to fifteenth images of the target images, and the processing apparatus 20B rasterizes the sixth to ninth images of the target images.

In step S120, the CPU 11 waits until the raster capacity and the actual measurement value of the processing time for each target image are acquired from each processing apparatus 20. In other words, the CPU 11 waits until the raster capacity and actual measurement value of the processing time for each raster image are acquired from all the processing apparatuses 20 which are instructed to perform rasterization in step S118. For example, in a case where the CPU 11 instructs the processing apparatus 20A to rasterize the first target image in step S118, the raster capacity and the actual measurement value of the processing time of the processing apparatus 20A are acquired from the processing apparatus 20A. In a case where the raster capacity and the actual measurement value of the processing time for each target image are acquired from each processing apparatus 20 (step S120: YES), the CPU 11 proceeds to step S122.

In step S122, the CPU 11 stores the raster capacity and actual measurement value of the processing time for each target image, received in step S120, in the image database 12A.

In step S124, the CPU 11 determines whether or not a print instruction for printing the printed matter by the image forming apparatus 30 is received. In a case where the print instruction for printing the printed matter by the image forming apparatus 30 is received (step S124: YES), the CPU 11 proceeds to step S126. On the other hand, in a case where the print instruction for printing the printed matter by the image forming apparatus 30 is not received (step S124: NO), the CPU 11 returns the process to step S114.

In step S126, the CPU 11 transmits a transfer instruction to transfer all the raster images to the image forming apparatus 30, to each processing apparatus 20.

The processing apparatus 20, which has received the transfer instruction from the information processing apparatus 10, transfers the raster images to the image forming apparatus 30. Specifically, the processing apparatus 20 transfers the initial images to the image forming apparatus 30 in accordance with the assignment determined in step S112. Then, for the raster images other than the initial images, the processing apparatus 20 transfers the raster images rasterized by the processing apparatus 20 to the image forming apparatus 30.

In step S128, the CPU 11 waits until the actual measurement value of the transfer time of the raster image is acquired from each processing apparatus 20. In a case where the actual measurement value of the transfer time of the raster image is acquired from each processing apparatus 20 (step S128: YES), the CPU 11 proceeds to step S130.

In step S130, the CPU 11 stores the actual measurement value of the transfer time of the raster image received in step S 128 in the image database 12A.

In step S 132, the CPU 11 determines whether or not the rasterization of all the images related to the rasterization start instruction is completed. In a case where rasterization of all the images related to the rasterization start instruction is completed (step S132: YES), the CPU 11 ends the present information processing. On the other hand, in a case where rasterization of all the images related to the rasterization start instruction is not completed (step S132: NO), the CPU 11 returns to step S 114.

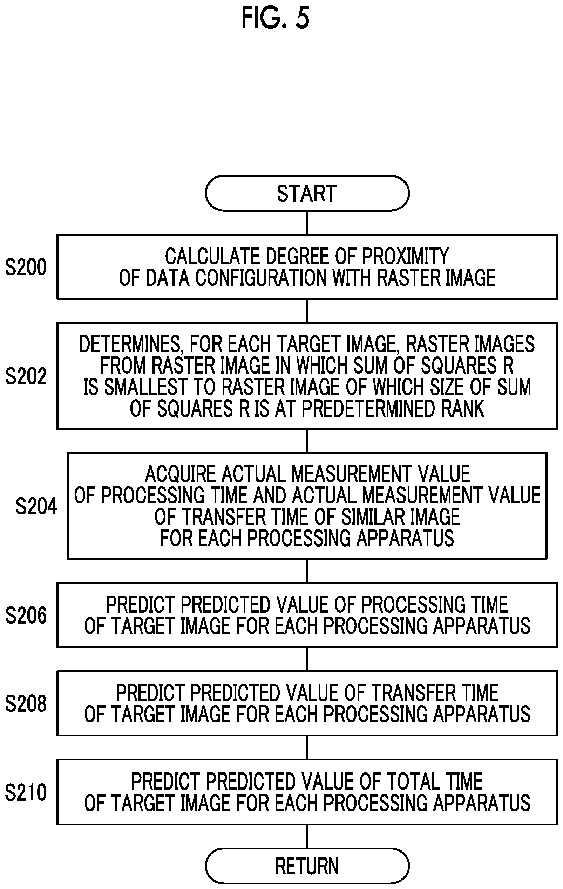

Next, with reference to Fig. 5, a flow of the prediction process executed in the information processing in the present exemplary embodiment will be described.

In step S200 of Fig. 5, the CPU 11 calculates the degree of proximity of data configuration of each target image with the raster image. In the present exemplary embodiment, the CPU 11 calculates the sum of squares R, which is the sum of the square of the difference in the capacity of the text data between Raster image 1 and Target image 1, the square of the difference in the capacity of the vector data, and the square of the difference in the capacity of the image data. The smaller the sum of squares R, a raster image has a higher degree of proximity of configuration of data.

Specifically, the CPU 11 calculates the sum of squares R for each target image using Equation (1). In Equation (1), xn represents the capacity of the text data forming the raster image, yn represents the capacity of the vector data forming the raster image, and zn represents the capacity of the image data forming the raster image. In addition, x represents the capacity of text data forming the target image, y represents the capacity of vector data forming the target image, and z represents the capacity of the image data forming the target image.

[Equation 1]

$$(x_n - x)^2 + (y_n - y)^2 + (z_n - z)^2 = R \qquad (1)$$

In the present exemplary embodiment, since there are three types of data of text data, vector data, and image data, which are data configuring the images included in the printed matter, the sum of the squares of the differences in the capacities of the three types of data between Raster image 1 and Target image 1 is applied as the sum of squares R. However, the present invention is not limited to this example. In a case where data configuring the image included in the printed matter is not of the above-described type, the above-described value may not be applied as the sum of squares R.

Further, the degree of proximity of data configuration between the target image and the raster image is not limited to the sum of squares R. For example, as the degree of proximity of configuration, a value obtained by raising the sum of the squares of the difference in the capacity of data to the 1/2 power, or the sum of the difference in the capacity of data may be applied.

In step S202, the CPU 11 determines, for each target image, raster images from a raster image in which the sum of squares R is the smallest to a raster image of which the size of the sum of squares R is at a predetermined rank. In other words, in step S202, the CPU 11 determines for each target image, raster images from a raster image having a highest degree of proximity of configuration of data to a raster image of which a rank of proximity of the configuration is a predetermined rank. Hereinafter, in step S202, raster images determined by the CPU 11 from a raster image having the smallest sum of squares R to a raster image of which the size of the sum of squares R is at a predetermined rank are collectively referred to as "similar images". For example, the CPU 11 determines the second, fourth, seventh, and ninth raster images as similar images to the first target image.

The predetermined rank is a number equal to or greater than the number of types of data configuring the image included in the printed matter. In the present exemplary embodiment, since there are three types of data, the predetermined rank is set to 4 which is equal to or greater than 3. However, the present invention is not limited to this example. The predetermined rank may be a number less than the number of types of data configuring the image included in the printed matter.

In step S204, the CPU 11 acquires the actual measurement value of the processing time and the actual measurement value of the transfer time of the similar image for each processing apparatus 20, from the image database 12A. In a case where the actual measurement value of the transfer time of the similar image is not stored in the image database 12A, the CPU 11 acquires the predicted value of the transfer time of the similar image instead of the actual measurement value of the transfer time.

In step S206, the CPU 11 predicts the predicted value of the processing time of the target image for each processing apparatus 20, based on the actual measurement value of the processing time of the similar image. In the present exemplary embodiment, the CPU 11 substitutes the capacity of each type of data configuring similar image into the left side of Equation (2) for predicting the predicted value tr of the processing time of the image represented by the sum of a value obtained by multiplying the capacity x of the text data by the coefficient ar, a value obtained by multiplying the capacity y of the vector data by the coefficient br, a value obtained by multiplying the capacity z of the image data by the coefficient cr, and the section dr. Then, the CPU 11 substitutes the actual measurement value of the processing time of the similar image into the right side of Equation (2) (that is, the predicted value tr of the processing time). Then, the CPU 11 calculates the coefficient ar, the coefficient br, the coefficient cr, and the section dr for each processing apparatus 20 by addressing Equation (2) in which the values for each similar image are substituted as simultaneous equations. Then, the CPU 11 substitutes the calculated coefficient ar, coefficient br, coefficient cr, and section dr into Equation (2), and substitutes the capacity x of the text data, the capacity y of the vector data, and the capacity z of the image data in the target image into Equation (2), thereby predicting the predicted value tr of the processing time of the target image for each processing apparatus 20. Then, the CPU 11 stores the calculated predicted value tr of the processing time of the target image for each processing apparatus 20 in the image database 12A.

[Equation 2]

$$ar \cdot x + br \cdot y + cr \cdot z + dr = tr \qquad (2)$$

The method of predicting the predicted value of the processing time of the target image is not limited to the above-described example. For example, the CPU 11 may predict an actual measurement value of the processing time of the raster image in which the sum of squares R is the smallest, as a predicted value of the processing time of the target image. In addition, the CPU 11 may predict the predicted value of the processing time of the target image, by inputting the target image into the processing time prediction model trained using a set of the raster image and the actual measurement value of the processing time of the raster image as training data.

In step S208, the CPU 11 predicts the predicted value of the transfer time of the target image for each processing apparatus 20, based on the actual measurement value of the transfer time of the similar image. In the present exemplary embodiment, the CPU 11 substitutes the capacity of each type of data configuring similar image into the left side of Equation (3) for predicting the predicted value ts of the transfer time of the image represented by the sum of a value obtained by multiplying the capacity x of the text data by the coefficient as, a value obtained by multiplying the capacity y of the vector data by the coefficient bs, a value obtained by multiplying the capacity z of the image data by the coefficient cs, and the section ds. Then, the CPU 11 substitutes the actual measurement value of the transfer time of the similar image into the right side of Equation (3) (that is, the predicted value ts of the transfer time). Then, the CPU 11 calculates the coefficient as, the coefficient bs, the coefficient cs, and the section ds for each processing apparatus 20 by addressing Equation (3) in which the values for each similar image are substituted as simultaneous equations. Then, the CPU 11 substitutes the calculated coefficient as, coefficient bs, coefficient cs, and section ds into Equation (3), and substitutes the capacity x of the text data, the capacity y of the vector data, and the capacity z of the image data in the target image into Equation (3), thereby predicting the predicted value ts of the transfer time of the target image for each processing apparatus 20. Then, the CPU 11 stores the calculated predicted value ts of the transfer time of the target image for each processing apparatus 20 in the image database 12A.

[Equation 3]

$$as \cdot x + bs \cdot y + cs \cdot z + ds = ts \qquad (3)$$

The method of predicting the predicted value of the transfer time of the target image is not limited to the above-described example. For example, the CPU 11 may predict an actual measurement value of the transfer time of the raster image in which the sum of squares R is the smallest, as a predicted value of the transfer time of the target image. In addition, the CPU 11 may predict the predicted value of the transfer time of the target image, by inputting the target image into the transfer time prediction model trained using a set of the raster image and the actual measurement value of the transfer time of the raster image as training data.

In step S210, the CPU 11 predicts the predicted value of the total time obtained by summing the processing time and the transfer time, for each target image, for each processing apparatus 20. In the present exemplary embodiment, the CPU 11 predicts the sum of the predicted value of the processing time predicted in step S208 and the predicted value of the transfer time predicted in step S210, as the predicted value of the total time of the target image. Then, the CPU 11 stores the calculated predicted value of the total time of the target image for each processing apparatus 20 in the image database 12A. Then, the CPU 11 ends the prediction process and proceeds to step S116 of the information processing.

Although the exemplary embodiment has been described above, the technical scope of the present disclosure is not limited to the scope described in the above exemplary embodiment. Various modifications or improvements can be made to the exemplary embodiment without departing from the gist of the invention, and the modified or improved form is also included in the technical scope of the present disclosure.

In addition, the above exemplary embodiments do not limit the claimed invention, and not all combinations of features described in the exemplary embodiments are necessary for the solution of the invention. Inventions at various stages are included in the above-described exemplary embodiments, and various inventions can be extracted by combining a plurality of disclosed constituent elements. Even in a case where some constituent elements are deleted from all the constituent elements shown in the exemplary embodiments, as long as an effect is obtained, a configuration in which some constituent elements are deleted can be extracted as an invention.

For example, in the above exemplary embodiment, the information processing apparatus 10 which is a single apparatus executes information processing. However, the present invention is not limited to this example. For example, a plurality of apparatuses may execute the information processing.

Further, in the above exemplary embodiment, the CPU 11 assigns the target images such that the difference between the predicted values of the total time is within a predetermined range. However, the present invention is not limited to this example. For example, the CPU 11 may assign the target images such that a difference between predicted values of the processing time or the transfer time is within a predetermined range. Further, the CPU 11 may assign the target image such that the total time, the processing time, the transfer time, or the like is a predetermined time for each processing apparatus 20.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

In the above exemplary embodiment, the mode in which each program is installed in the ROM or the storage has been described, but the present invention is not limited to this. Each program according to the above exemplary embodiment may be provided in the form of a recording on a computer readable storage medium. For example, each program according to the above exemplary embodiment may be provided in a form recorded in an optical disc such as a compact disc (CD)-ROM and a digital versatile disc (DVD)-ROM, or in a form recorded in a semiconductor memory such as a universal serial bus (USB) memory and a memory card. Further, each program according to the above exemplary embodiment may be acquired from an external device via the communication I/F 17.

In addition, in the above-described exemplary embodiment, although a case where the processes in the information processing apparatus 10 are implemented by executing a program by a software configuration using a computer has been described, the present disclosure is not limited thereto. For example, the processes in the information processing apparatus 10 may be implemented by a hardware configuration or a combination of the hardware configuration and the software configuration.

Further, needless to say, the configurations of the information processing apparatus 10, the processing apparatus 20, and the image forming apparatus 30 described in the exemplary embodiment described above are an example, and an unnecessary part may be deleted or a new part may be added without departing from the gist of the present disclosure.

In addition, needless to say, the flow of the processes in the information processing apparatus 10 described in the above exemplary embodiment (refer to Figs. 3 and 5) is also an example, and an unnecessary step may be deleted, a new step may be added, or processing order may be changed without departing from the gist of the present disclosure.

Further, the following supplementary notes will be disclosed with respect to the above exemplary embodiments.

(((1))) An information processing system comprising:
a processor configured to:

in a case where a plurality of images included in a printed matter are distributed to and rasterized by one or a plurality of processing apparatuses, the processing apparatus including at least one of a physically independent processing apparatus or a processing apparatus virtually configured in a physical apparatus, and one or a plurality of image forming apparatuses print a plurality of raster images created by being rasterized,
cause the one or plurality of processing apparatuses to rasterize the images, respectively.

(((2))) The information processing system according to (((1))), wherein the processor is configured to:

for a raster image created by being rasterized among the plurality of images, acquire an actual measurement value of a processing time required for rasterization and an actual measurement value of a transfer time for transferring the raster image to the image forming apparatus, respectively;
for each of unprocessed images that are not rasterized among the plurality of images, predict a predicted value of a total time obtained by summing the processing time and the transfer time, based on the actual measurement value of the processing time and the actual measurement value of the transfer time; and
cause the one or plurality of processing apparatuses to rasterize the unprocessed images assigned such that a difference between predicted values of the total time for respective processing apparatuses is within a predetermined range.

(((3))) The information processing system according to (((2))), wherein the processor is configured to:
predict a predicted value of the total time for the unprocessed images, based on the actual measurement value of the processing time and the predicted value of the transfer time of each of the raster images from a raster image having a highest degree of proximity of configuration of data with the unprocessed images to a raster image of which a rank of proximity of the configuration is a predetermined rank.

(((4))) The information processing system according to (((3))),
wherein the predetermined rank is equal to or higher than the number of types of the data.

(((5))) An information processing program causing a computer to execute a process comprising:

causing the one or plurality of processing apparatuses to rasterize the images, respectively,
in a case where a plurality of images included in a printed matter are distributed to and rasterized by one or a plurality of processing apparatuses, the processing apparatus including at least one of a physically independent processing apparatus or a processing apparatus virtually configured in a physical apparatus, and one or a plurality of image forming apparatuses print a plurality of raster images created by being rasterized.

According to (((1))) or (((5))), it is possible that the distributed images are rasterized by one or a plurality of processing apparatuses.

According to (((2))), it is possible to cause the one or a plurality of processing apparatuses to rasterize the images distributed such that a difference between the predicted values of the total time is within a predetermined range.

According to (((3))), it is possible to predict with high accuracy a predicted value of the total time for the unprocessed image, as compared with the case of not using the actual measurement value of the processing time and the predicted value of the transfer time of each of the raster images from a raster image having a highest degree of proximity of configuration of data with the unprocessed images to a raster image of which a rank of proximity of the configuration is a predetermined rank.

According to (((4))), it is possible to easily predict the predicted value of the total time of the unprocessed images, as compared with a case where the predetermined rank is less than the number of types of data.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. The scope of the invention is defined by the following claims.

Brief Description of the Reference Symbols

10: information processing apparatus (information processing system)
11: CPU (processor)
12: ROM
13: RAM
14: storage
17: communication I/F
19: bus
20: processing apparatus
30: image forming apparatus
100: rasterization system

Claims

1. An information processing system (10) comprising:
a processor (11) configured to:
in a case where a plurality of images included in print data are to be distributed to and rasterized by a processing system and to be printed as raster images on one or more image forming apparatuses (30), the processing system including at least one of a plurality of physically independent processing apparatuses (20) and a plurality of processing apparatuses (20) virtually configured in at least one physical apparatus:
transmit the print data to each of the processing apparatuses (20); **characterized in that** the processor (11) is further configured to:

for each of the raster images created by rasterizing a subset of the plurality of images by each of the processing apparatuses (20), acquire an actual measurement value of the processing time required for rasterization and predict the value of the transfer time for transferring the raster image to the image forming apparatus (30); for each of unprocessed images that is not rasterized among the plurality of images, predict, for each of the processing apparatuses (20), the value of the total time obtained by summing the processing time and the transfer time, based on the actual measurement value of the processing time and the predicted value of the transfer time; assign the unprocessed images to the plurality of processing apparatuses (20) for rasterizing, such that the difference between predicted values of the total time for respective processing apparatuses (20) is within a predetermined range; and cause the respective processing apparatuses to transfer all the raster images of the print data to the one or more image forming apparatuses (30).

2. The information processing system (10) according to claim 1, wherein the processor (11) is configured to: predict a predicted value of the total time for the unprocessed images, based on the actual measurement value of the processing time and the predicted value of the transfer time of each of the raster images from a raster image having the highest degree of proximity of configuration of data with the unprocessed images to a raster image of which the rank of proximity of the configuration is a predetermined rank.

3. The information processing system (10) according to claim 2, wherein the predetermined rank is equal to or higher than the number of types of the data.

4. An information processing program comprising instructions which, when the program is executed by a computer (10), cause the computer to execute a process comprising:

in a case where a plurality of images included in print data are to be distributed to and rasterized by a processing system and to be printed as raster images on one or more image forming apparatuses (30), the processing system including at least one of a plurality of physically independent processing apparatuses (20) and a plurality of processing apparatuses (20) virtually configured in at least one physical apparatus: transmitting the print data to each of the processing apparatuses (20); **characterized in that** the process further comprises:

for each of the raster images created by rasterizing a subset of the plurality of images by each of the processing apparatuses (20), acquiring an actual measurement value of the processing time required for rasterization and predicting the value of the transfer time for transferring the raster image to the image forming apparatus (30); for each of unprocessed images that is not rasterized among the plurality of images, predicting, for each of the processing apparatuses (20), the value of the total time obtained by summing the processing time and the transfer time, based on the actual measurement value of the processing time and the predicted value of the transfer time; assigning the unprocessed images to the plurality of processing apparatuses (20) for rasterizing, such that the difference between predicted values of the total time for respective processing apparatuses (20) is within a predetermined range; and

causing the respective processing apparatuses to transfer all the raster images of the print data to the one or more image forming apparatuses (30).

5. An information processing method comprising:

in a case where a plurality of images included in print data are to be distributed to and rasterized by a processing system and to be printed as raster images on one or more image forming apparatuses (30), the processing system including at least one of a plurality of physically independent processing apparatuses (20) and a plurality of processing apparatuses (20) virtually configured in at least one physical apparatus: transmitting the print data to each of the processing apparatuses (20); **characterized in that** the method further comprises:

for each of the raster images created by rasterizing a subset of the plurality of images by each of the processing apparatuses (20), acquiring an actual measurement value of the processing time required for rasterization and predicting the value of the transfer time for transferring the raster image to the image forming apparatus (30);

for each of unprocessed images that is not rasterized among the plurality of images, predicting, for each of the processing apparatuses (20), the value of the total time obtained by summing the processing time and the transfer time, based on the actual measurement value of the processing time and the predicted value of the transfer time;

assigning the unprocessed images to the plurality of processing apparatuses (20) for rasterizing, such that the difference between predicted values of the total time for respective processing apparatuses (20) is within a predetermined range; and

causing the respective processing apparatuses to transfer all the raster images of the print data to the one or more image forming apparatuses (30).

**Patentansprüche**

1. Informationsverarbeitungssystem (10), umfassend:
einen Prozessor (11), der so konfiguriert ist, dass er:

in einem Fall, in dem mehrere Bilder, die in Druckdaten enthalten sind, an ein Verarbeitungssystem zu verteilen und von diesem zu rastern sind und als Rasterbilder auf einer oder mehreren Bilderzeugungsvorrichtungen (30) zu drucken sind, wobei das Verarbeitungssystem mindestens eine von mehreren physisch unabhängigen Verarbeitungsvorrichtungen (20) und mehreren Verarbeitungsvorrichtungen (20), die virtuell in mindestens einer physischen Vorrichtung konfiguriert sind, enthält:die Druckdaten an jede der Verarbeitungsvorrichtungen (20) überträgt;
**dadurch gekennzeichnet, dass** der Prozessor (11) ferner so konfiguriert ist, dass er:

für jedes der Rasterbilder, die durch Rastern einer Untermenge der mehreren Bilder durch jede der Verarbeitungsvorrichtungen (20) erzeugt wurden, einen tatsächlichen Messwert der zur Rasterung erforderlichen Verarbeitungszeit erfasst und den Wert der Übertragungszeit zum Übertragen des Rasterbildes an die Bilderzeugungsvorrichtung (30) vorhersagt;
für jedes von nicht verarbeiteten Bilder, das nicht gerastert ist, unter den mehreren Bildern, für jede der Verarbeitungsvorrichtungen (20) den Wert der Gesamtzeit, die durch Summieren der Verarbeitungszeit und der Übertragungszeit erhalten wird, auf der Grundlage des tatsächlichen Messwerts der Verarbeitungszeit und des vorhergesagten Werts der Übertragungszeit vorhersagt;
die nicht verarbeiteten Bilder den mehreren Verarbeitungsvorrichtungen (20) zum Rastern so zuordnet, dass die Differenz zwischen vorhergesagten Werten der Gesamtzeit für jeweilige Verarbeitungsvorrichtungen (20) innerhalb eines vorbestimmten Bereichs liegt; und
die jeweiligen Verarbeitungsvorrichtungen veranlasst, alle von den Rasterbildern der Druckdaten an die eine oder mehreren Bilderzeugungsvorrichtungen (30) zu übertragen.

2. Informationsverarbeitungssystem (10) nach Anspruch 1, wobei der Prozessor (11) so konfiguriert ist, dass er:
einen vorhergesagten Wert der Gesamtzeit für die nicht verarbeiteten Bilder auf der Grundlage des tatsächlichen Messwerts der Verarbeitungszeit und des vorhergesagten Werts der Übertragungszeit jedes der Rasterbilder von einem Rasterbild mit dem höchsten Grad an Nähe an Konfiguration von Daten zu den nicht verarbeiteten Bildern bis zu einem Rasterbild, von dem der Rang an Nähe der Konfiguration ein vorbestimmter Rang ist, vorhersagt.

3. Informationsverarbeitungssystem (10) nach Anspruch 2,
wobei der vorbestimmte Rang gleich oder höher als die Anzahl an Typen der Daten ist.

4. Informationsverarbeitungsprogramm, umfassend Anweisungen, die, wenn das Programm von einem Computer (10) ausgeführt wird, den Computer veranlassen, einen Prozess auszuführen, der umfasst:
in einem Fall, in dem mehrere Bilder, die in Druckdaten enthalten sind, an ein Verarbeitungssystem zu verteilen und von diesem zu rastern sind und als Rasterbilder auf einer oder mehreren Bilderzeugungsvorrichtungen (30) zu drucken sind, wobei das Verarbeitungssystem mindestens eine von mehreren physisch unabhängigen Verarbeitungsvorrichtungen (20) und mehreren Verarbeitungsvorrichtungen (20), die virtuell in mindestens einer physischen Vorrichtung konfiguriert sind, enthält:

Übertragen der Druckdaten an jede der Verarbeitungsvorrichtungen (20);
**dadurch gekennzeichnet, dass** der Prozess ferner umfasst:

für jedes der Rasterbilder, die durch Rastern einer Untermenge der mehreren Bilder durch jede der Verarbeitungsvorrichtungen (20) erzeugt wurden, Erfassen eines tatsächlichen Messwerts der zur Rasterung erforderlichen Verarbeitungszeit und

Vorhersagen des Werts der Übertragungszeit zum Übertragen des Rasterbildes an die Bilderzeugungsvorrichtung (30);

für jedes von nicht verarbeiteten Bilder, das nicht gerastert ist, unter den mehreren Bildern, Vorhersagen, für jede der Verarbeitungsvorrichtungen (20), des Werts der Gesamtzeit, die durch Summieren der Verarbeitungszeit und der Übertragungszeit erhalten wird, auf der Grundlage des tatsächlichen Messwerts der Verarbeitungszeit und des vorhergesagten Werts der Übertragungszeit;

Zuordnen der nicht verarbeiteten Bilder zu den mehreren Verarbeitungsvorrichtungen (20) zum Rastern so, dass die Differenz zwischen vorhergesagten Werten der Gesamtzeit für jeweilige Verarbeitungsvorrichtungen (20) innerhalb eines vorbestimmten Bereichs liegt; und

Veranlassen der jeweiligen Verarbeitungsvorrichtung, alle von den Rasterbildern der Druckdaten an die eine oder mehreren Bilderzeugungsvorrichtungen (30) zu übertragen.

5. Informationsverarbeitungsverfahren, umfassend:

in einem Fall, in dem mehrere Bilder, die in Druckdaten enthalten sind, an ein Verarbeitungssystem zu verteilen und von diesem zu rastern sind und als Rasterbilder auf einer oder mehreren Bilderzeugungsvorrichtungen (30) zu drucken sind, wobei das Verarbeitungssystem mindestens eine von mehreren physisch unabhängigen Verarbeitungsvorrichtungen (20) und mehreren Verarbeitungsvorrichtungen (20), die virtuell in mindestens einer physischen Vorrichtung konfiguriert sind, enthält:

Übertragen der Druckdaten an jede der Verarbeitungsvorrichtungen (20);
**dadurch gekennzeichnet, dass** das Verfahren ferner umfasst:

für jedes der Rasterbilder, die durch Rastern einer Untermenge der mehreren Bilder durch jede der Verarbeitungsvorrichtungen (20) erzeugt wurden, Erfassen eines tatsächlichen Messwerts der zur Rasterung erforderlichen Verarbeitungszeit und

Vorhersagen des Werts der Übertragungszeit zum Übertragen des Rasterbildes an die Bilderzeugungsvorrichtung (30);

für jedes von nicht verarbeiteten Bilder, das nicht gerastert ist, unter den mehreren Bildern, Vorhersagen, für jede der Verarbeitungsvorrichtungen (20), des Werts der Gesamtzeit, die durch Summieren der Verarbeitungszeit und der Übertragungszeit erhalten wird, auf der Grundlage des tatsächlichen Messwerts der Verarbeitungszeit und des vorhergesagten Werts der Übertragungszeit;

Zuordnen der nicht verarbeiteten Bilder zu den mehreren Verarbeitungsvorrichtungen (20) zum Rastern so, dass die Differenz zwischen vorhergesagten Werten der Gesamtzeit für jeweilige Verarbeitungsvorrichtungen (20) innerhalb eines vorbestimmten Bereichs liegt; und

Veranlassen, dass die jeweiligen Verarbeitungsvorrichtungen alle von den Rasterbildern der Druckdaten an die eine oder mehreren Bilderzeugungsvorrichtungen (30) übertragen.

**Revendications**

1. Système de traitement d'informations (10) comprenant :

un processeur (11) configuré pour :

dans un cas où une pluralité d'images incluses dans des données d'impression doivent être distribuées à et tramées par un système de traitement et imprimées sous forme d'images tramées sur un ou plusieurs appareils de formation d'images (30), le système de traitement incluant au moins un parmi une pluralité d'appareils de traitement (20) physiquement indépendants et une pluralité d'appareils de traitement (20) virtuellement configurés dans au moins un appareil physique :

transmettre les données d'impression à chacun des appareils de traitement (20) ;
**caractérisé en ce que** le processeur (11) est en outre configuré pour :

pour chacune des images tramées créées par tramage d'un sous-ensemble de la pluralité d'images par chacun des appareils de traitement (20), acquérir une valeur de mesure réelle du temps de traitement requis pour un tramage et prédire la valeur du temps de transfert pour transférer l'image tramée à l'appareil de formation d'images (30) ;

pour chacune d'images non traitées qui ne sont pas tramées parmi la pluralité d'images, prédire, pour chacun des appareils de traitement (20), la valeur du temps total obtenu en additionnant le temps de traitement et le temps de transfert sur la base de la valeur de mesure réelle du temps de traitement et la valeur prédite du temps de transfert ;

attribuer les images non traitées à la pluralité d'appareils de traitement (20) pour un tramage, de sorte que la différence entre les valeurs prédites du temps total pour des appareils de traitement (20) respectifs est dans une plage prédéterminée ; et

amener les appareils de traitement respectifs à transférer toutes les images tramées des données d'impression à les un ou plusieurs appareils de formation d'images (30).

2. Système de traitement d'informations (10) selon la revendication 1, dans lequel le processeur (11) est configuré pour :
prédire une valeur prédite du temps total pour les images non traitées sur la base de la valeur de mesure réelle du temps de traitement et la valeur prédite du temps de transfert de chacune des images tramées depuis une image tramée ayant le degré le plus élevé de proximité de configuration de données avec les images non traitées jusqu'à une image tramée dont le rang de proximité de la configuration est un rang prédéterminé.

3. Système de traitement d'informations (10) selon la revendication 2,
dans lequel le rang prédéterminé est égal ou supérieur au nombre de types des données.

4. Programme de traitement d'informations comprenant des instructions qui, lorsque le programme est exécuté par un ordinateur (10), amènent l'ordinateur à exécuter un processus comprenant :
dans un cas où une pluralité d'images incluses dans des données d'impression doivent être distribuées à et tramées par un système de traitement et imprimées sous forme d'images tramées sur un ou plusieurs appareils de formation d'images (30), le système de traitement incluant au moins un parmi une pluralité d'appareils de traitement (20) physiquement indépendants et une pluralité d'appareils de traitement (20) virtuellement configurés dans au moins un appareil physique :

transmettre les données d'impression à chacun des appareils de traitement (20) ;
**caractérisé en ce que** le processus comprend en outre :

pour chacune des images tramées créées par tramage d'un sous-ensemble de la pluralité d'images par chacun des appareils de traitement (20), acquérir une valeur de mesure réelle du temps de traitement requis pour un tramage et prédire la valeur du temps de transfert pour transférer l'image tramée à l'appareil de formation d'images (30) ;

pour chacune d'images non traitées qui ne sont pas tramées parmi la pluralité d'images, prédire, pour chacun des appareils de traitement (20), la valeur du temps total obtenu en additionnant le temps de traitement et le temps de transfert sur la base de la valeur de mesure réelle du temps de traitement et la valeur prédite du temps de transfert ;

attribuer les images non traitées à la pluralité d'appareils de traitement (20) pour un tramage, de sorte que la différence entre les valeurs prédites du temps total pour des appareils de traitement (20) respectifs est dans une plage prédéterminée ; et

amener les appareils de traitement respectifs à transférer toutes les images tramées des données d'impression à les un ou plusieurs appareils de formation d'images (30).

5. Procédé de traitement d'informations comprenant :
dans un cas où une pluralité d'images incluses dans des données d'impression doivent être distribuées à et tramées par un système de traitement et imprimées sous forme d'images tramées sur un ou plusieurs appareils de formation d'images (30), le système de traitement incluant au moins un parmi une pluralité d'appareils de traitement (20) physiquement indépendants et une pluralité d'appareils de traitement (20) virtuellement configurés dans au moins un appareil physique :

transmettre les données d'impression à chacun des appareils de traitement (20) ;
**caractérisé en ce que** le procédé comprend en outre :

pour chacune des images tramées créées par tramage d'un sous-ensemble de la pluralité d'images par chacun des appareils de traitement (20), acquérir une valeur de mesure réelle du temps de traitement requis pour un tramage et prédire la valeur du temps de transfert pour transférer l'image tramée à l'appareil de formation d'images (30) ;

pour chacune d'images non traitées qui ne sont pas tramées parmi la pluralité d'images, prédire, pour chacun des appareils de traitement (20), la valeur du temps total obtenu en additionnant le temps de traitement et le temps de transfert sur la base de la valeur de mesure réelle du temps de traitement et la valeur prédite du temps de transfert ;

attribuer les images non traitées à la pluralité d'appareils de traitement (20) pour un tramage, de sorte que la différence entre les valeurs prédites du temps total pour des appareils de traitement (20) respectifs est dans une plage prédéterminée ; et

amener les appareils de traitement respectifs à transférer toutes les images tramées des données d'impression à les un ou plusieurs appareils de formation d'images (30).

## FIG. 1

## FIG. 2

# FIG. 3

START

S100 — TRANSMITS PRINTED MATTER TO EACH PROCESSING APPARATUS

S102 — IS RASTERIZATION START INSTRUCTION RECEIVED?
NO
YES

S104 — GIVE INSTRUCTION TO RASTERIZE PLURALITY OF IDENTICAL IMAGES

S106 — ARE ACTUAL MEASUREMENT VALUE OF PROCESSING TIME AND CAPACITY OF EACH INITIAL IMAGE ACQUIRED?
NO
YES

S108 — STORE ACTUAL MEASUREMENT VALUE OF PROCESSING TIME AND CAPACITY

S110 — PREDICT PREDICTED VALUE OF TRANSFER TIME OF EACH INITIAL IMAGE

S112 — DETERMINE ASSIGNMENT OF TRANSFER OF INITIAL IMAGES SUCH THAT DIFFERENCE IN TOTAL OF PREDICTED VALUE OF TRANSFER TIME IS WITHIN PREDETERMINED RANGE

S114 — PREDICTION PROCESS

S116 — DETERMINE ASSIGNMENT FOR RASTERIZING TARGET IMAGE SUCH THAT DIFFERENCE IN PREDICTED VALUE OF TOTAL TIME IS WITHIN PREDETERMINED RANGE

S118 — INSTRUCT TO RASTERIZE TARGET IMAGES IN ACCORDANCE WITH DETERMINED ASSIGNMENT

S120 — ARE ACTUAL MEASUREMENT VALUE OF PROCESSING TIME AND CAPACITY OF EACH TARGET IMAGE ACQUIRED?
NO
YES

S122 — STORE ACTUAL MEASUREMENT VALUE OF PROCESSING TIME AND CAPACITY

S124 — IS PRINT START INSTRUCTION RECEIVED?
NO
YES

S126 — INSTRUCT TO TRANSFER ALL RASTER IMAGES

S128 — IS ACTUAL MEASUREMENT VALUE OF TRANSFER TIME ACQUIRED?
NO
YES

S130 — STORE ACTUAL MEASUREMENT VALUE OF TRANSFER TIME

S132 — IS RASTERIZATION OF ALL IMAGES COMPLETED?
NO
YES

END

## FIG. 4

12A

| | | IMAGE | 1 | 2 | ... | 15 | 16 | 17 | ... |
|---|---|---|---|---|---|---|---|---|---|
| CAPACITY | | TEXT DATA [MB] | 1 | 1 | ... | 1 | 1 | 1 | ... |
| | | VECTOR DATA [MB] | 0 | 0 | ... | 0 | 5 | 0 | ... |
| | | IMAGE DATA [MB] | 0 | 10 | ... | 20 | 0 | 0 | ... |
| | | RASTER CAPACITY [MB] | 400 | 800 | ... | 800 | 600 | 400 | ... |
| PROCESSING TIME [S] | PREDICTED VALUE | PROCESSING APPARATUS 20A | - | - | ... | - | 0.4 | 0.2 | ... |
| | | PROCESSING APPARATUS 20B | - | - | ... | - | 0.27 | 0.13 | ... |
| | | : | : | : | : | : | : | : | : |
| | ACTUAL MEASUREMENT VALUE | PROCESSING APPARATUS 20A | 0.2 | 0.6 | ... | 1.2 | 0.43 | - | ... |
| | | PROCESSING APPARATUS 20B | 0.13 | 0.4 | ... | 0.8 | - | 0.15 | ... |
| | | : | : | : | : | : | : | : | : |
| TRANSFER TIME [S] | PREDICTED VALUE | PROCESSING APPARATUS 20A | 0.2 | 0.4 | ... | 0.4 | 0.3 | 0.2 | ... |
| | | PROCESSING APPARATUS 20B | 0.4 | 0.8 | ... | 0.8 | 0.6 | 0.4 | ... |
| | | : | : | : | : | : | : | : | : |
| | ACTUAL MEASUREMENT VALUE | PROCESSING APPARATUS 20A | 0.2 | 0.4 | ... | - | 0.33 | - | ... |
| | | PROCESSING APPARATUS 20B | - | - | ... | 0.81 | - | 0.41 | ... |
| | | : | : | : | : | : | : | : | : |
| TOTAL TIME [S] | PREDICTED VALUE | PROCESSING APPARATUS 20A | - | - | ... | - | 0.7 | 0.4 | ... |
| | | PROCESSING APPARATUS 20B | - | - | ... | - | 0.87 | 0.53 | ... |
| | | : | : | : | : | : | : | : | : |

# FIG. 5

```
                      ┌─────────────────┐
                      │      START      │
                      └─────────────────┘
                               │
        ┌──────────────────────────────────────────────────┐
  S200  │          CALCULATE DEGREE OF PROXIMITY           │
        │     OF DATA CONFIGURATION WITH RASTER IMAGE      │
        └──────────────────────────────────────────────────┘
                               │
        ┌──────────────────────────────────────────────────┐
        │  DETERMINES, FOR EACH TARGET IMAGE, RASTER IMAGES│
        │    FROM RASTER IMAGE IN WHICH SUM OF SQUARES R   │
  S202  │  IS SMALLEST TO RASTER IMAGE OF WHICH SIZE OF SUM│
        │     OF SQUARES R IS AT PREDETERMINED RANK        │
        └──────────────────────────────────────────────────┘
                               │
        ┌──────────────────────────────────────────────────┐
        │        ACQUIRE ACTUAL MEASUREMENT VALUE          │
        │ OF PROCESSING TIME AND ACTUAL MEASUREMENT VALUE  │
  S204  │        OF TRANSFER TIME OF SIMILAR IMAGE         │
        │          FOR EACH PROCESSING APPARATUS          │
        └──────────────────────────────────────────────────┘
                               │
        ┌──────────────────────────────────────────────────┐
  S206  │      PREDICT PREDICTED VALUE OF PROCESSING TIME  │
        │  OF TARGET IMAGE FOR EACH PROCESSING APPARATUS   │
        └──────────────────────────────────────────────────┘
                               │
        ┌──────────────────────────────────────────────────┐
  S208  │      PREDICT PREDICTED VALUE OF TRANSFER TIME    │
        │  OF TARGET IMAGE FOR EACH PROCESSING APPARATUS   │
        └──────────────────────────────────────────────────┘
                               │
        ┌──────────────────────────────────────────────────┐
  S210  │       PREDICT PREDICTED VALUE OF TOTAL TIME      │
        │  OF TARGET IMAGE FOR EACH PROCESSING APPARATUS   │
        └──────────────────────────────────────────────────┘
                               │
                      ┌─────────────────┐
                      │     RETURN      │
                      └─────────────────┘
```

**EP 4 455 858 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013077129 A
- US 2012133984 A1
- US 2016139859 A1